# EUROPEAN PATENT SPECIFICATION

(11) **EP 3 576 371 B1**
(45) Date of publication and mention of the grant of the patent: **05.08.2020**
(21) Application number: 18869461.6
(22) Date of filing: 09.05.2018
(51) Int. Cl.: H04L 29/06, H04L 29/08

(54) **METHOD AND SYSTEM FOR TRANSMITTING STREAMING MEDIA RESOURCE**
VERFAHREN UND SYSTEM ZUR ÜBERTRAGUNG VON STREAMING-MEDIEN-RESSOURCEN
PROCÉDÉ ET SYSTÈME PERMETTANT DE TRANSMETTRE UNE RESSOURCE MULTIMÉDIA DE DIFFUSION EN CONTINU

(30) Priority: 18.04.2018 CN 201810350528
(43) Date of publication of application: 04.12.2019
(73) Proprietor: Wangsu Science & Technology Co., Ltd., Shanghai 200030 (CN)
(72) Inventor: ZOU, Shuang, Xuhui District, Shanghai 200030 (CN); LV, Shibiao, Xuhui District, Shanghai 200030 (CN)
(74) Representative: Hanna Moore + Curley
(86) International application number: PCT/CN2018/086180
(87) International publication number: WO 2019/200630

(56) References cited:
- EP-A1- 1 322 094
- CN-A- 105 516 238
- CN-A- 105 872 044
- CN-A- 105 959 711
- US-A1- 2015 310 126

## Description

### FIELD OF DISCLOSURE

The present disclosure generally relates to the field of Internet technology and, more particularly, relates to a method and system for transmitting streaming media resources.

### BACKGROUND

WebRTC (Web Real-Time Communication) protocol is widely used in network-based video conferencing, video calling, and other application scenarios due to its cross-platform structure and high real-time performance.

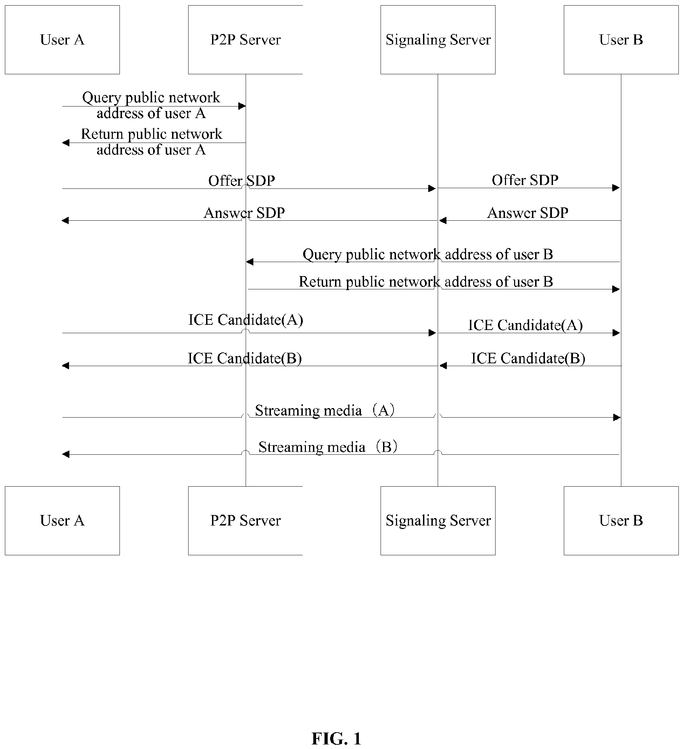

Referring to FIG. 1, in the standard WebRTC protocol, a peer-to-peer communication link may be usually established between user A and user B. The specific process may include the following steps:
Step 1: User A sends a query to the P2P server to obtain its own public network address.
Step 2: User A generates an Offer SDP according to the streaming media information collected by the hardware of user A, and sends the Offer SDP to user B through the relay of the signaling server.
Step 3: User B receives and processes the Offer SDP, generates an Answer SDP according to the streaming media information collected by the hardware of user B, and sends the Answer SDP to user A through the relay of the signaling server.
Step 4: User B sends a query to the P2P server to obtain its own public network address.
Step 5: User A generates an ICE Candidate according to its public network address, and transmits the generated ICE Candidate to user B through the relay of the signaling server.
Step 6: User B generates an ICE Candidate according to its public network address, and transmits the generated ICE Candidate to user A through the relay of the signaling server.
Step 7: Both user A and user B can send their own streaming media to the other party according to the exchanged SDP and ICE Candidate, and receive the streaming media sent by the other party.

It can be seen from the above that WebRTC provides a peer-to-peer communication method. The establishment of this communication method requires a complicated process. At the same time, this communication method is incompatible with many existing network architectures. For example, in a Content Delivery Network (CDN), the communication is usually based on RTMP (Real Time Messaging Protocol) and HTTP (HyperText Transfer Protocol). In order to enable a large number of terminal devices to view streaming media resources with a low delay, there is a need of a technology for applying the WebRTC standards to a CDN to improve the transmission efficiency of streaming media resources.

The relevant state of the art is represented by EP 1322094 A1.

### BRIEF SUMMARY OF THE DISCLOSURE

The present disclosure provides a method and system for transmitting streaming media resources, which improve the transmission efficiency of the streaming media resources.

To achieve the above objective, in one aspect, the present disclosure provides a method for transmitting streaming media resources. The method includes: receiving a processing request for a target streaming media resource sent by a client, dispatching the processing request to a first process; determining whether it is the first process to process the processing request, if it is not the first process to process the processing request, forwarding the processing request to a second process in a layer in which the first process is located; determining whether it is the second process to process the processing request, if it is the second process to process the processing request, constructing, through the second process, a response request corresponding to the processing request, where the response request includes an access address generated by the second process for accessing the target streaming media resource; feeding back the response request to the first process, and feeding back the response request to the client through the first process, to allow the client to establish a connection with the second process, and the target streaming media resource to be transmitted through the established connection.

To achieve the above objective, in another aspect, the present disclosure provides a system for transmitting streaming media resources. The system includes a client and an edge node, where: the client is configured to send a processing request for a target streaming media resource to the edge node; and the edge node is configured to dispatch the processing request to a first process, determine whether it is the first process to process the processing request, if it is not the first process to process the processing request, forward the processing request to a second process in a layer in which the first process is located, determine whether it is the second process to process the processing request, if it is the second process to process the processing request, construct, through the second process, a response request corresponding to the processing request, where the response request includes an access address generated by the second process for accessing the target streaming media resource, feed back the response request to the first process, and feed back the response request to the client through the first process, to allow the client to establish a connection with the second process, and the target streaming media resource to be transmitted through the established connection.

As can be seen from the above, in the technical solutions provided by the present disclosure, the HTTP protocol and the WebRTC protocol may be integrated, which simplifies the process of establishing communication connection, and can also adapt to the routing and forwarding regulations in the CDN. Multiple layers may be included in a CDN, such as an access layer (edge nodes), a relay layer (parent nodes), a core layer (source nodes), and the like. Routing or forwarding is usually involved within or between layers. Specifically, when a first process in a certain layer receives a processing request sent by a client, according to the routing rule in the CDN, it may be determined whether the processing request should be processed by the first process. If the processing request should not be processed by the first process, according to the routing rule, the processing request may be forwarded to a second process in the same layer. The second process may construct a response request for the processing request, where the response request may include an ICE candidate generated by the second process, and the ICE candidate may serve as an access address for accessing a target streaming media resource. After the response request is fed back to the client through the first process, a WebRTC communication connection may be established between the client and the second process. The client may upload the streaming media resource to the second process or obtain the streaming media resource from the second process. Further, if the second process still cannot process the processing request, the processing request may be forwarded to a third process in a next layer. The third process may construct a response request in a similar manner, except that the access address included in the response request is generated by the third process. After the response request is fed back to the second process, the second process may rewrite the access address therein into its own access address, and feed back the response request with the rewritten access address to the client through the first process. In this way, the client and the second process, and the second process and the third process may respectively establish a WebRTC connection, and thus the streaming media resource can be transmitted. It can be seen that the technical solutions provided by the present disclosure may effectively combine the WebRTC standards with the CDN, which can utilize the fast distribution function of the CDN, while also achieving the low delay performance of the WebRTC, thereby improving the transmission efficiency of the streaming media resources.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is an interactive diagram of a standard WebRTC process in the prior art;
FIG. 2 is a flowchart of a method for transmitting streaming media resources according to some embodiments of the present disclosure;
FIG. 3 is an interactive diagram of a method for transmitting streaming media resources according to some embodiments of the present disclosure;
FIG. 4 is an interactive diagram of a method for uploading a streaming media resource according to some embodiments of the present disclosure;
FIG. 5 is an interactive diagram of a method for downloading a streaming media resource according to some embodiments of the present disclosure;
FIG. 6 is a flowchart of another method for transmitting streaming media resources according to some embodiments of the present disclosure;
FIG. 7 is a schematic diagram of an application scenario for transmitting streaming media resources according to some embodiments of the present disclosure; and
FIG. 8 is a schematic structural diagram of a computer terminal according to some embodiments of the present disclosure.

### DETAILED DESCRIPTION

To make the objective, technical solutions, and advantages of the present disclosure clearer, the present disclosure will be made in detail hereinafter with reference to the accompanying drawings.

### Embodiment 1

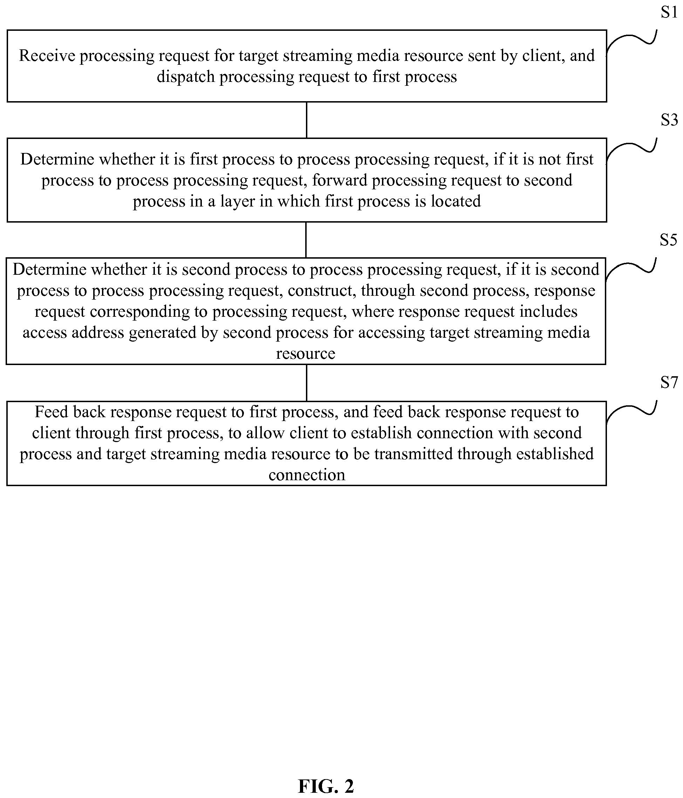

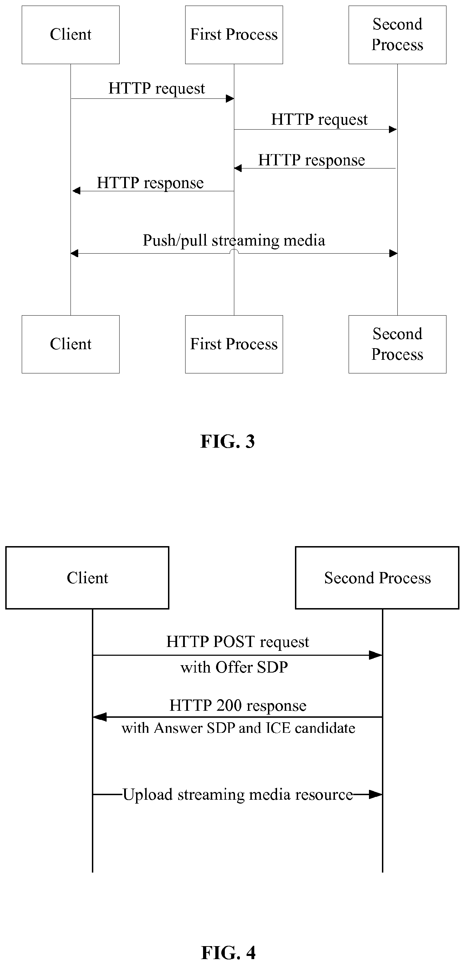

The present disclosure provides a method for transmitting streaming media resources, which may be applied to a CDN. Referring to FIG. 2 and FIG. 3, the method may include the following steps.

S1: receive a processing request for a target streaming media resource sent by a client, and dispatch the processing request to a first process.

In the disclosed embodiment, when a client needs to upload or download a target streaming media resource, a processing request for the target streaming media resource may be initiated, where the processing request may include a resource acquisition request and a resource uploading request. In the disclosed embodiment, each streaming media resource may have a unique identifier. The rule for naming a unique identifier may not be limited here, as long as the corresponding streaming media resource can be uniquely identified. In real applications, a unique identifier may be a Uniform Resource Locator (URL). In the disclosed embodiment, the naming rule of a URL may be consistent with the naming rules of URLs of the streaming media resources in RTMP and HTTP. For example, the URL of a streaming media resource may be http://www.a.com/live/test.

In the disclosed embodiment, the processing request sent by the client may be an HTTP POST request or an HTTP GET request. The processing request may be received by a load balancing server in the CDN and distributed to an edge server in the edge node by the load balancing server. The load balancing server may distribute the processing request according to a preset load balancing policy. For example, the processing request may be dispatched to an edge server whose current load is lowest. In the edge server, the received requests are typically processed by processes. Accordingly, the processing request may be dispatched to a first process in the edge server.

S3: determine whether it is the first process to process the processing request, and if it is not the first process to process the processing request, forward the processing request to a second process in a layer in which the first process is located.

Multiple layers may be included in a CDN, such as an access layer (edge nodes), a relay layer (parent nodes), a core layer (source nodes), and the like. The processing requests sent by the clients are usually transferred within or between layers depending on the real situations. Accordingly, a CDN may have certain routing rule that defines a processing request sent by the client should be processed by which process in which layer. Accordingly, after receiving the processing request dispatched by the load balancing server, the first process may determine, according to the routing rule, whether the processing request should be processed by itself. In the disclosed embodiment, the expression of the routing rule may be different for different processing requests. For example, for a resource acquisition request, the routing rule may be expressed as: determining whether the target streaming media resource is included in the local resource associated with the first process; if the target streaming media resource is included in the local resource associated with the first process, it may be determined that the processing request is processed by the first process; if the target streaming media resource is not included in the local resource associated with the first process, it may be determined that the processing request will not be processed by the first process. For another example, for a resource uploading request, the routing rule may be expressed as: calculating a hash value corresponding to a unique identifier based on the unique identifier of the target streaming media resource included in the resource uploading request. In real applications, a hash algorithm may be used to calculate the hash value of the URL of a target streaming media resource. The calculated hash value may be the foregoing hash value. In the disclosed embodiment, each process may associate in advance with a certain number of hash values. Accordingly, after the hash value of a unique identifier is calculated, it may be determined whether a process associated with the hash value is the first process. If the process associated with the hash value is the first process, it means that the hash value signifies the first process, then it may be determined that the processing request is to be processed by the first process. If the process associated with the hash value is not the first process, it means that the hash value does not signify the first process, then it may be determined that the processing request will not be processed by the first process.

In the disclosed embodiment, if the first process is not responsible for processing the processing request, the processing request may be forwarded to a second process in the same layer according to the routing rule.

S5: determine whether it is the second process to process the processing request, and if it is the second process to process the processing request, construct, through the second process, a response request corresponding to the processing request, where the response request includes an access address generated by the second process for accessing the target streaming media resource.

In the disclosed embodiment, after receiving the processing request, the second process may also determine, according to the routing rule, whether the processing request is to be processed by itself. If the routing rule indicates that the second process still cannot process the processing request, it means that all the processes in that layer cannot process the request. In that case, the request may be forwarded to another layer. For example, a client in Shanghai initiates a request to download a streaming media resource. The request is dispatched by the load balancing server to an idle first process in the edge node. By calculating the hash value corresponding to the request, it indicates that the request should actually be processed by the second process in the edge node. Accordingly, the processing request may be forwarded to the second process. However, in the local resource associated with the second process, there is no streaming media resource that the client wants to download. Therefore, the second process cannot process the request. At this point, the request may be forwarded to another process in the core layer, and the request is processed by such process in the core layer.

In the disclosed embodiment, if the second process determines that the request may be processed by itself, the second process may attempt to establish a WebRTC communication connection with the client. The target streaming media resource may be transmitted later through the established WebRTC communication connection. In the disclosed embodiment, the process of establishing a WebRTC communication connection may be different for different processing requests. Referring to FIG. 4, when a client needs to upload a target streaming media resource to the second process, a resource uploading request may be initiated. At this time, the client may first generate an Offer SDP based on the streaming media information collected by its own hardware. In the Offer SDP, information supported by the client, such as the video encoding modes, the audio encoding modes, and whether the audio/video is encrypted, may be included. For instance, a simple example of an Offer SDP may be as follows:

```
                 Offer SDP {
                 Now send a media stream resource;
                 Video coding may use H264, VP8, VP9;
                 Audio coding may use AAC, MP3, OPUS;
                 Encryption may be enabled;
                 }
```

As can be seen from the above, in the Offer SDP, a plurality of video encoding modes and a plurality of audio encoding modes supported by the client may be listed. Accordingly, the generated Offer SDP may include the above-listed candidate streaming media information.

In the disclosed embodiment, the resource uploading request sent by a client may be, for example, an HTTP POST request. The request message body of the request may be the Offer SDP described above. Accordingly, the resource uploading request may include candidate streaming media information supported by the client.

In the disclosed embodiment, after receiving the resource uploading request, the second process may extract the included candidate streaming media information from the request. Next, based on its own hardware configuration, the second process may determine, from the candidate streaming media information, a target video coding mode and a target audio coding mode supported by the second process itself, and construct a response streaming media information based on the target video coding mode and the target audio coding mode. For example, the second process may determine that it is able to accept the target streaming media resource to be uploaded by the client at this moment, and specify that the video encoding mode is H264, the audio encoding mode is OPUS, and the target streaming media resource may be encrypted. Accordingly, an example of the response streaming media information generated by the second process, Answer SDP, may be as follows:

```
                 Answer SDP {
                 Can receive the media stream you sent;
                 Please use H264 for video encoding;
                 Please use OPUS for audio coding;
                 Please enable encryption;
                 }
```

In the disclosed embodiment, in order to establish a WebRTC connection, besides the SDP information, ICE candidate information is also required. ICE candidate information may be constructed based on a public network IP address. Specifically, the second process may obtain its own public network IP address and port address. The public network IP address may be stored in the edge server where the second process is located, without being read from other servers. The second process may then use a combination of the public network IP address and the port address as an access address for accessing the target streaming media resource. For example, the public network IP address may be 10.8.114.195, and the port address for receiving the streaming media resource may be 54225. The eventually generated access address may be 10.8.114.195:54225. This access address may be used as the ICE candidate. In this way, the second process may obtain the response streaming media information (Answer SDP) and the access address (ICE candidate) required to establish the WebRTC communication connection.

In the disclosed embodiment, the second process may construct a response message in response to the received resource uploading request. The response message may be an HTTP response message with a status code of 200. The response streaming media information and the access address may be included in the response message body of the response message.

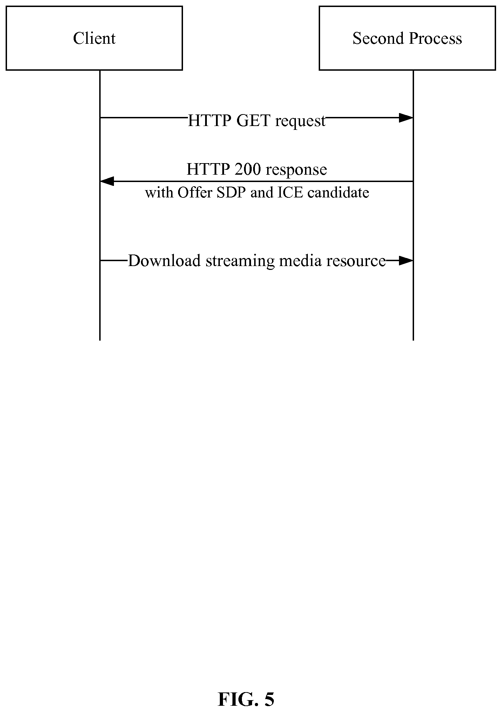

In one embodiment, referring to FIG. 5, the processing request may be a resource acquisition request. A client may download a target streaming media resource by initiating a resource acquisition request. The resource acquisition request may be, for example, an HTTP GET request. The URL of the request may be the unique identifier of the target streaming media resource. After receiving the resource acquisition request, the second process may determine the target streaming media resource that the client wants to download from the associated local resource according to the unique identifier included in the request. At this moment, the second process may obtain its own public network IP address and port address. The public network IP address may be stored in the edge server where the second process is located, without being read from other servers. The second process may use a combination of the public network IP address and the port address as an access address for accessing the target streaming media resource. For example, the public network IP address may be 10.8.114.195, and the port address for transmitting the streaming media resource may be 54225, and the eventually generated access address may be 10.8.114.195:54225. This access address may be used as the ICE candidate required to establish the WebRTC communication connection.

In the disclosed embodiment, the streaming media resources in the local resource associated with the second process may be uploaded by other clients. After a client uploads a streaming media resource, the second process may associate and store the streaming media resource with the corresponding response streaming media information. In this way, based on the unique identifier of the target streaming media resource, the second process may query the response stream media information associated with the unique identifier, and use the response streaming media information as the target streaming media information associated with the target streaming media resource. Accordingly, the second process may use the target streaming media information as an Offer SDP. In this way, the second process generates the Offer SDP and the ICE candidate. At this point, the second process may construct a response message, which may be, for example, an HTTP response message with a status code of 200. The response message body of the response message may include the above-mentioned access address (ICE candidate) and the target streaming media information (Offer SDP) associated with the target streaming media resource.

S7: feed back the response request to the first process, and feed back the response request to the client through the first process, to allow the client to establish a connection with the second process, and the target streaming media resource to be transmitted through the established connection.

In the disclosed embodiment, after the second process constructs the response request corresponding to the processing request, the response request may be fed back to the first process. The first process may continue to forward the response request to the client. In this way, with the SDP information and the ICE candidate, a WebRTC communication connection may be established between the client and the second process.

In the disclosed embodiment, the target streaming media resource may be transmitted between the client and the second process through the established WebRTC communication connection. Specifically, for a resource uploading request, the client may process the target streaming media resource according to the response streaming media information, and upload the processed target streaming media resource to the second process according to the access address. For a resource acquisition request, the client may download the target streaming media resource through the access address, and process the downloaded target streaming media resource by using the target streaming media information.

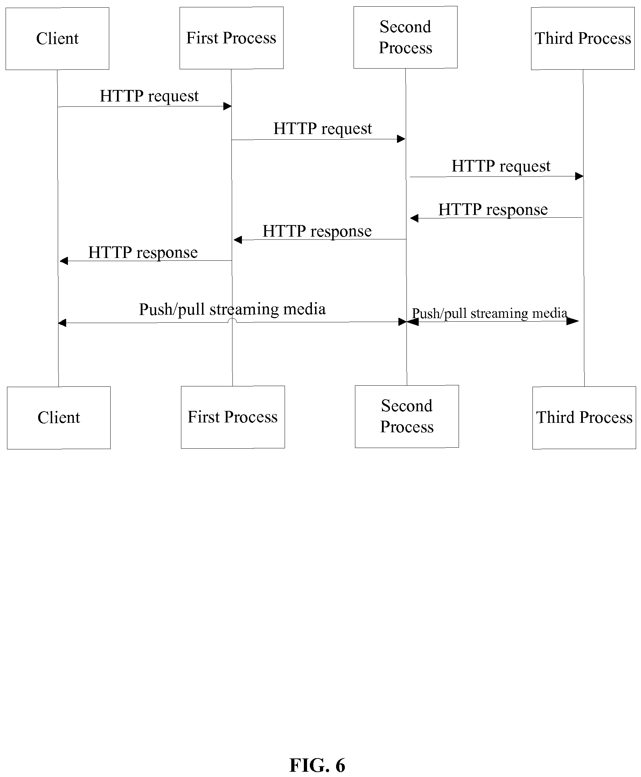

In one embodiment, referring to FIG. 6, if the second process cannot process the processing request, the processing request may be forwarded to a load balancing server in another layer according to the routing rule. Afterwards, the load balancing server of that layer may dispatch the processing request to a third process. Here, the first process and the second process are located in the same layer, while the third process is located in a different layer.

In the disclosed embodiment, after receiving the processing request, the third process may also determine whether it can process the request according to the routing rule. If the third process can process the request, the third process may construct a response request corresponding to the processing request. The manner in which the response request is constructed is similar to that described above, and different response requests may be constructed for different processing requests. For example, the processing request may include a resource uploading request, and the resource uploading request may include candidate streaming media information supported by the client. When the third process constructs the response request corresponding to the processing request, the response streaming media information may be generated based on the candidate streaming media information and its own hardware configuration of the third process. Thereafter, the third process may obtain its own public network IP address and port address, and use the combination of the public network IP address and the port address as the access address for accessing the target streaming media resource. Based on the response streaming media information and the access address, the third process may construct the response request, and use the response streaming media information and the access address as the response message body of the response request.

Further, for a resource acquisition request, the resource acquisition request may include a unique identifier of the target streaming media resource. The third process may acquire the target streaming media information associated with the unique identifier when constructing the response request corresponding to the processing request. At the same time, the third process may also obtain its own public network IP address and port address, and use the combination of the public network IP address and the port address as the access address for accessing the target streaming media resource. In this way, the third process may construct the response request, and use the target streaming media information and the access address as the response message body of the response request.

In the disclosed embodiment, after constructing the response request, the third process may feed back the constructed response request to the second process. The response request received by the second process includes the SDP information and the ICE candidate, so the second process may establish a WebRTC communication connection with the third process.

In the disclosed embodiment, after receiving the response request sent by the third process, the second process may obtain its own public network IP address and port address, and use the combination of the public network IP address and the port address as the access address generated by the second process. Thereafter, the second process may rewrite the access address in the response request constructed by the third process to the access address generated by the second process, and feed back the response request with the rewritten access address to the client. The response request received by the client includes the SDP information and the ICE candidate of the second process, which allows the client to establish a WebRTC communication connection with the second process. In this way, the target streaming media resource may be subsequently transmitted through the connection established between the client and the second process and the connection established between the second process and the third process. Specifically, for a resource uploading request, the client may process the target streaming media resource according to the response streaming media information, and upload the processed target streaming media resource to the second process according to the access address generated by the second process. The second process may associate and store the processed target streaming media resource with the response streaming media information, and upload the processed target streaming media resource to the third process according to the access address generated by the third process. Similarly, the third process may also associate and store the processed target streaming media resource with the response streaming media information. In this way, the resources associated with the second process and the third process may each include the uploaded target streaming media resource.

In addition, for a resource acquisition request, the second process may first download the target streaming media resource from the third process according to the access address generated by the third process, and associate and store the downloaded target streaming media resource with the target streaming media information. Then, the client may download the target streaming media resource from the second process according to the access address generated by the second process, to finish the resource downloading process.

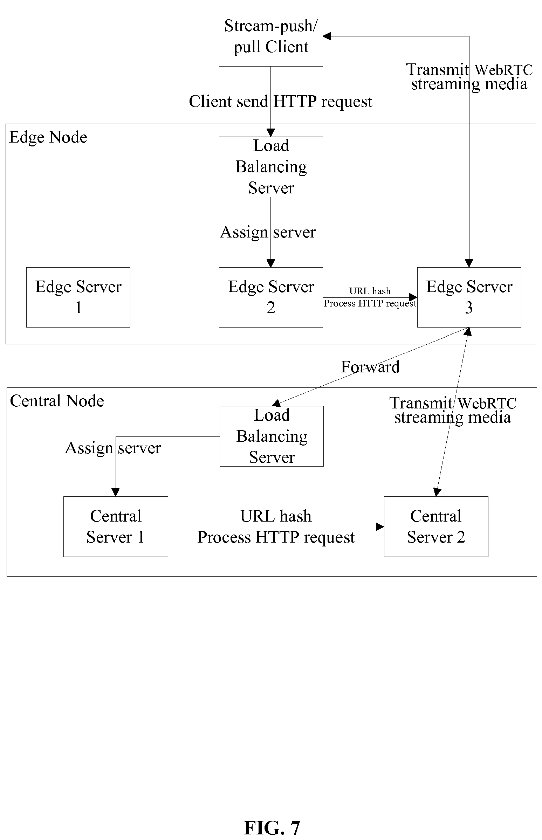

It should be noted that, after the determination based on the routing rule, the third process may also be unable to process the processing request. At this point, the processing request may be further forwarded to a fourth process in the same layer as the third process. Specifically, referring to FIG. 7, in the scenario shown in FIG. 7, a processing request sent by the client sequentially goes through the edge server 2 (the first process) and the edge server 3 (the second process) in the edge node, and after through the central server 1 (the third process) in the central node, the request reaches the central server 2 (the fourth process) that is able to process the request. In this case, the fourth process may construct a response request corresponding to the processing request in the above-described manner, where the response request includes an access address generated by the fourth process for accessing the target streaming media resource. The response request constructed by the fourth process may be then fed back to the second process through the third process, to allow the second process to establish a connection with the fourth process. At this point, the second process may rewrite the access address in the response request constructed by the fourth process to the access address generated by the second process, and feed back the response request with the rewritten access address to the client, to allow the client to establish a connection with the second process. In this way, the target streaming media resource may be subsequently transmitted through the connection established between the client and the second process and the connection established between the second process and the fourth process.

### Embodiment 2

The present disclosure further provides a system for transmitting streaming media resources. The system includes a client and an edge node, where:
the client is configured to send a processing request for a target streaming media resource to the edge node; and
the edge node is configured to dispatch the processing request to a first process, determine whether it is the first process to process the processing request, if it is not the first process to process the processing request, forward the processing request to a second process in a layer in which the first process is located, determine whether it is the second process to process the processing request, if it is the second process to process the processing request, construct, through the second process, a response request corresponding to the processing request, where the response request includes an access address generated by the second process for accessing the target streaming media resource, feed back the response request to the first process, and feed back the response request to the client through the first process, to allow the client to establish a connection with the second process, and the target streaming media resource to be transmitted through the established connection.

In one embodiment, the system further includes a central node, where the central node includes at least a third process, and the third process is configured to, when the second process cannot process the processing request, receive the dispatched processing request and construct a response request corresponding to the processing request.

Specifically, the response request includes an access address generated by the third process for accessing the target streaming media resource, and the response request constructed by the third process is fed back to the second process, to allow the second process to establish a connection with the third process.

Correspondingly, the second process is further configured to rewrite the access address in the response request constructed by the third process to the access address generated by the second process, and feed back the response request with the rewritten access address to the client to allow the client to establish a connection with the second process.

In one embodiment, the central node further includes a fourth process, where the fourth process is configured to, when the third process cannot process the processing request, receive the processing request forwarded from the third process, and construct a response request corresponding to the processing request.

Specifically, the response request includes an access address generated by the fourth process for accessing the target streaming media resource, and the response request constructed by the fourth process is fed back to the second process through the third process, to allow the second process to establish a connection with the fourth process.

Correspondingly, the second process is further configured to rewrite the access address in the response request constructed by the fourth process to the access address generated by the second process, and feed back the response request with the written access address to the client to allow the client to establish a connection with the second process.

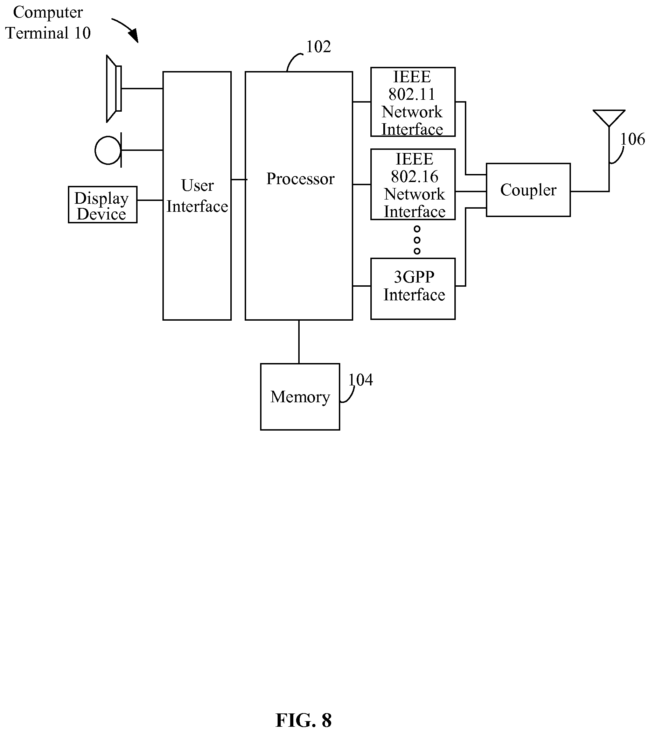

Referring to FIG. 8, in the present disclosure, the technical solutions of the disclosed embodiments may be applied to a computer terminal 10 shown in FIG. 8. The computer terminal 10 may include one or more (only one is shown in the figure) processors 102 (a processor 102 may include, but is not limited to, a processing device such as a microcontroller MCU or a programmable logic device FPGA), a memory 104 for storing data, and a transmission device 106 for communication purpose. It will be understood by those skilled in the art that the structure shown in FIG. 8 is provided by way of illustration, but not by way of limitation of the structures of the above-described electronic devices. For example, the computer terminal 10 may also include more or fewer components than those shown in FIG. 8, or have a different configuration than that shown in FIG. 8.

The memory 104 may be used to store software programs and modules of application software. The processor 102 implements various functional applications and data processing by executing software programs and modules stored in the memory 104. The memory 104 may include a high-speed random access memory, and also a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network include, but are not limited to, the Internet, an intranet, a local area network, a mobile communication network, and combinations thereof.

The transmission device 106 is configured to receive or transmit data via the network. The aforementioned specific examples of the network may include a wireless network provided by the communication provider of the computer terminal 10. In one application, the transmission device 106 includes a network interface controller (NIC) that may be connected to other network devices through the base stations to allow it to communicate with the Internet. In one application, the transmission device 106 may be a Radio Frequency (RF) module that is configured to communicate with the Internet via a wireless approach.

As can be seen from the above, in the technical solutions provided by the present disclosure, the HTTP protocol and the WebRTC protocol may be integrated, which simplifies the process of establishing a communication connection, and can also adapt to the routing and forwarding regulations in the CDN. Multiple layers may be included in a CDN, such as an access layer (edge nodes), a relay layer (parent nodes), a core layer (source nodes), and the like. Routing or forwarding is usually involved within or between layers. Specifically, when a first process in a certain layer receives a processing request sent by a client, according to the routing rule in the CDN, it may be determined whether the processing request should be processed by the first process. If the processing request should not be processed by the first process, according to the routing rule, the processing request may be forwarded to a second process in the same layer. The second process may construct a response request for the processing request, where the response request may include an ICE candidate generated by the second process, and the ICE candidate may serve as an access address for accessing a target streaming media resource. After the response request is fed back to the client through the first process, a WebRTC communication connection may be established between the client and the second process. The client may upload the streaming media resource to the second process, or obtain the streaming media resource from the second process. Further, if the second process still cannot process the processing request, the processing request may be forwarded to a third process in a next layer. The third process may construct a response request in a similar manner, except that the access address included in the response request is generated by the third process. After the response request is fed back to the second process, the second process may rewrite the access address therein into its own access address, and feed back the response request with the rewritten access address to the client through the first process. In this way, the client and the second process, and the second process and the third process may respectively establish a WebRTC connection, and thus the streaming media resource can be transmitted. It can be seen that the technical solutions provided by the present disclosure may effectively combine the WebRTC standards with the CDN, which can utilize the fast distribution function of the CDN, while also achieving the low delay performance of the WebRTC, thereby improving the transmission efficiency of the streaming media resources.

## Claims

1. A method for transmitting streaming media resources, the method comprising:
receiving, by a load balancing server in a Content Delivery Network, CDN, a processing request for a target streaming media resource sent by a client, and dispatching the processing request to a first process in an edge server in the CDN;
determining, by the edge server, whether it is the first process to process the processing request, and if it is not the first process to process the processing request, forwarding the processing request to a second process in a layer in which the first process is located;
determining, by the edge server, whether it is the second process to process the processing request, and if it is the second process to process the processing request, constructing, through the second process, a response request corresponding to the processing request, wherein the response request includes an Interactive Connectivity Establishment, ICE, candidate generated by the second process serving as an access address for accessing the target streaming media resource; and
feeding back, by the edge server, the response request to the first process, and feeding back the response request to the client through the first process, to allow the client to establish a WebRTC communication connection with the second process, and the target streaming media resource to be transmitted through the established WebRTC communication connection.

2. The method according to claim 1, wherein the processing request includes a resource acquisition request, and determining, by the edge server, whether it is the first process to process the processing request further includes:
determining whether the target streaming media resource is included in a local resource associated with the first process, if the target streaming media resource is included in the local resource associated with the first process, determining that it is the first process to process the processing request, and if the target streaming media resource is not included in the local resource associated with the first process, determining that it is not the first process to process the processing request.

3. The method according to claim 1, wherein the processing request includes a resource uploading request, and the resource uploading request includes a unique identifier of the target streaming media resource, and determining, by the edge server, whether it is the first process to process the processing request further includes:
calculating a hash value corresponding to the unique identifier, and determining whether the hash value signifies the first process, if the hash value signifies the first process, determining that it is the first process to process the processing request, and if the hash value does not signify the first process, determining that it is not the first process to process the processing request.

4. The method according to claim 1, wherein the processing request includes a resource uploading request, the resource uploading request includes candidate streaming media information supported by the client, and the response request further includes response streaming media information generated by the second process based on the candidate streaming media information, and transmitting the target streaming media resource through the established connection further includes:
processing, by the client, the target streaming media resource according to the response streaming media information, and uploading the processed target streaming media resource to the second process according to the access address.

5. The method according to claim 1, wherein the processing request includes a resource acquisition request, the resource acquisition request includes a unique identifier of the target streaming media resource, and the response request further includes target streaming media information associated with the target streaming media resource, and transmitting the target streaming media resource through the established connection further includes:
downloading, by the client, the target streaming media resource through the access address, and processing the downloaded target streaming media resource according to the target streaming media information.

6. The method of claim 1, wherein generating the ICE candidate by the second process further includes:
obtaining, by the second process, public network IP address and port address of the second process, and using a combination of the public network IP address and the port address of the second process as the ICE candidate serving as the access address for accessing the target streaming media resource.

7. The method of claim 1, further comprising:
if the second process cannot process the processing request, dispatching, by the edge server, the processing request to a third process, wherein the third process and the second process are located in different layers of the CDN;
determining, by the edge server, whether it is the third process to process the processing request, if it is the third process to process the processing request, constructing, through the third process, a response request corresponding to the processing request, wherein the response request includes an access address generated by the third process for accessing the target streaming media resource;
feeding back, by the edge server, the response request constructed by the third process to the second process, to allow the second process to establish a connection with the third process;
rewriting, by the edge server, through the second process, the access address in the response request constructed by the third process to the access address generated by the second process, and feeding back a response request with the rewritten access address to the client, to allow the client to establish a connection with the second process; and
transmitting, by the edge server, the target streaming media resource through the connection established between the client and the second process and the connection established between the second process and the third process.

8. The method according to claim 7, wherein the processing request includes a resource uploading request, and the resource uploading request includes candidate streaming media information supported by the client, and constructing, by the third process, the response request corresponding to the processing request further includes:
generating, by the third process, response streaming media information based on the candidate streaming media information;
obtaining, by the third process, public network IP address and port address of the third process, and using a combination of the public network IP address and the port address of the third process as the access address for accessing the target streaming media resource; and
constructing, by the third process, the response request, and using the response streaming media information and the access address generated by the third process as a response message body of the response request.

9. The method according to claim 8, wherein transmitting the target streaming media resource further includes:
processing, by the client, the target streaming media resource according to the response streaming media information, and uploading the processed target streaming media resource to the second process according to the access address generated by the second process;
associating and storing, by the second process, the processed target streaming media resource with the response streaming media information, and uploading the processed target streaming media resource to the third process according to the access address generated by the third process; and
associating and storing, by the third process, the processed target streaming media resource with the response streaming media information.

10. The method according to claim 7, wherein the processing request includes a resource acquisition request, and the resource acquisition request includes a unique identifier of the target streaming media resource; and constructing, by the third process, the response request corresponding to the processing request further includes:
obtaining, by the third process, target streaming media information associated with the unique identifier;
obtaining, by the third process, public network IP address and port address of the third process, and using a combination of the public network IP address and the port address of the third process as the access address for accessing the target streaming media resource; and
constructing, by the third process, the response request, and using the target streaming media information and the access address generated by the third process as a response message body of the response request.

11. The method of claim 10, wherein transmitting the target streaming media resource further includes:
downloading, by the second process, the target streaming media resource from the third process according to the access address generated by the third process, and associating and storing the downloaded target streaming media resource with the target streaming media information; and
downloading, by the client, the target streaming media resource from the second process according to the access address generated by the second process.

12. The method of claim 7, further comprising:
if the third process cannot process the processing request, forwarding, by the edge server, the processing request to a fourth process at a same layer as the third process, to allow the fourth process to construct a response request corresponding to the processing request, wherein the response request includes an access address generated by the fourth process for accessing the target streaming media resource;
feeding back, by the edge server, through the third process, the response request constructed by the fourth process to the second process, to allow the second process to establish a connection with the fourth process;
rewriting, by the second process, the access address in the response request constructed by the fourth process to the access address generated by the second process, and feeding back a response request with the rewritten access address to the client, to allow the client to establish a connection with the second process; and
transmitting, by the edge server, the target streaming media resource through the connection established between the client and the second process and the connection established between the second process and the fourth process.

13. A system for transmitting streaming media resources, comprising a client and an edge node in a Content Delivery Network, CDN, wherein:
the client is configured to send a processing request for a target streaming media resource to the edge node; and
the edge node is configured to:
dispatch the processing request to a first process, determine whether it is the first process to process the processing request, if it is not the first process to process the processing request, forward the processing request to a second process in a layer in which the first process is located, determine whether it is the second process to process the processing request, if it is the second process to process the processing request, construct, through the second process, a response request corresponding to the processing request, wherein the response request includes an Interactive Connectivity Establishment, ICE,
candidate generated by the second process serving as an access address for accessing the target streaming media resource, feed back the response request to the first process, and feed back the response request to the client through the first process, to allow the client to establish a WebRTC communication connection with the second process, and the target streaming media resource to be transmitted through the established WebRTC communication connection.

14. The system according to claim 13, further comprising a central node, wherein the central node includes at least a third process, and the third process is configured to, when the second process cannot process the processing request, receive the dispatched processing request and construct a response request corresponding to the processing request.

15. The system according to claim 14, wherein the response request includes an access address generated by the third process for accessing the target streaming media resource, and the response request constructed by the third process is fed back to the second process to allow the second process to establish a connection with the third process; and
the second process is further configured to rewrite the access address in the response request constructed by the third process into the access address generated by the second process, and feed back a response request with the rewritten access address to the client, to allow the client to establish a connection with the second process.

## Patentansprüche

1. Verfahren zum Übertragen von Streaming-Medien-Ressourcen, wobei das Verfahren Folgendes umfasst:
Empfangen, durch einen Lastausgleichsserver in einem Content Delivery Network (CDN), einer Verarbeitungsanforderung für eine durch einen Client gesendeten Ziel-Streaming-Medien-Ressource, und Versenden der Verarbeitungsanforderung an einen ersten Prozess in einem Edge-Server in dem CDN;
Bestimmen, durch den Edge-Server, ob es der erste Prozess ist, der die Verarbeitungsanforderung verarbeitet, und, falls es nicht der erste Prozess ist, der die Verarbeitungsanforderung verarbeitet, Weiterleiten der Verarbeitungsanforderung an einen zweiten Prozess in einer Schicht, in der sich der erste Prozess befindet;
Bestimmen, durch den Edge-Server, ob es der zweite Prozess ist, der die Verarbeitungsanforderung verarbeitet, und, falls es der zweite Prozess ist, der die Verarbeitungsanforderung verarbeitet, Erstellen, über den zweiten Prozess, einer der Verarbeitungsanforderung entsprechenden Antwortanforderung, wobei die Antwortanforderung einen durch den zweiten Prozess erzeugten Interactive Connectivity Establishment (ICE)-Kandidaten beinhaltet, der als eine Zugriffsadresse zum Zugreifen auf die Ziel-Streaming-Medien-Ressource dient, und
Rückmelden, durch den Edge-Server, der Antwortanforderung an den ersten Prozess, und Rückmelden der Antwortanforderung an den Client über den ersten Prozess, um es dem Client zu ermöglichen, eine WebRTC-Kommunikationsverbindung mit dem zweiten Prozess herzustellen, und der Ziel-Streaming-Medien-Ressource zu ermöglichen, über die hergestellte WebRTC-Kommunikationsverbindung übertragen zu werden.

2. Verfahren nach Anspruch 1, wobei die Verarbeitungsanforderung eine Ressourcenerfassungsanforderung beinhaltet, und wobei das Bestimmen, durch den Edge-Server, ob es der erste Prozess ist, der die Verarbeitungsanforderung verarbeitet, ferner Folgendes beinhaltet:
Bestimmen, ob die Ziel-Streaming-Medien-Ressource in einer lokalen Ressource, die dem ersten Prozess zugeordnet ist, beinhaltet ist, falls die Ziel-Streaming-Medien-Ressource in der lokalen Ressource, die dem ersten Prozess zugeordnet ist, beinhaltet ist, Bestimmen, dass es der erste Prozess ist, der die Verarbeitungsanforderung verarbeitet, und falls die Ziel-Streaming-Medien-Ressource nicht in der lokalen Ressource, die dem ersten Prozess zugeordnet ist, beinhaltet ist, Bestimmen, dass es nicht der erste Prozess ist, der die Verarbeitungsanforderung verarbeitet.

3. Verfahren nach Anspruch 1, wobei die Verarbeitungsanforderung eine Ressourcen-Hochlade-Anforderung beinhaltet und die Ressourcen-Hochlade-Anforderung einen eindeutigen Bezeichner der Ziel-Streaming-Medien-Ressource beinhaltet, und wobei das Bestimmen, durch den Edge-Server, ob es der erste Prozess ist, der die Verarbeitungsanforderung verarbeitet, ferner Folgendes beinhaltet:
Berechnen eines dem eindeutigen Bezeichner entsprechenden Hash-Werts, und Bestimmen, ob der Hash-Wert den ersten Prozess kennzeichnet, falls der Hash-Wert den ersten Prozess kennzeichnet, Bestimmen, dass es der erste Prozess ist, der die Verarbeitungsanforderung verarbeitet, und falls der Hash-Wert nicht den ersten Prozess kennzeichnet, Bestimmen, dass es nicht der erste Prozess ist, der die Verarbeitungsanforderung verarbeitet.

4. Verfahren nach Anspruch 1, wobei die Verarbeitungsanforderung eine Ressourcen-Hochlade-Anforderung beinhaltet, wobei die Ressourcen-Hochlade-Anforderung Kandidaten-Streaming-Medien-Informationen beinhaltet, die durch den Client unterstützt werden, und die Antwortanforderung ferner durch den zweiten Prozess erzeugte Antwort-Streaming-Medien-Informationen beinhaltet, basierend auf den Kandidaten-Streaming-Medien-Informationen, und wobei das Übertragen der Ziel-Streaming-Medien-Ressource über die hergestellte Verbindung ferner Folgendes beinhaltet:
Verarbeiten, durch den Client, der Ziel-Streaming-Medien-Ressource gemäß den Antwort-Streaming-Medien-Informationen, und Hochladen der verarbeiteten Ziel-Streaming-Medien-Ressource an den zweiten Prozess gemäß der Zugriffsadresse.

5. Verfahren nach Anspruch 1, wobei die Verarbeitungsanforderung eine Ressourcenerfassungsanforderung beinhaltet, wobei die Ressourcenerfassungsanforderung einen eindeutigen Bezeichner der Ziel-Streaming-Medien-Ressource beinhaltet, und die Antwortanforderung ferner Ziel-Streaming-Medien-Informationen beinhaltet, die der Ziel-Streaming-Medien-Ressource zugeordnet sind, und wobei das Übertragen der Ziel-Streaming-Medien-Ressource über die hergestellte Verbindung ferner Folgendes beinhaltet:
Herunterladen, durch den Client, der Ziel-Streaming-Medien-Ressource über die Zugriffsadresse, und Verarbeiten der heruntergeladenen Ziel-Streaming-Medien-Ressource gemäß den Ziel-Streaming-Medien-Informationen.

6. Verfahren nach Anspruch 1, wobei das Erzeugen des ICE-Kandidaten durch den zweiten Prozess ferner Folgendes beinhaltet:
Erhalten, durch den zweiten Prozess, der IP-Adresse des öffentlichen Netzwerks und der Portadresse des zweiten Prozesses, und Verwenden einer Kombination der IP-Adresse des öffentlichen Netzwerks und der Portadresse des zweiten Prozesses als den ICE-Kandidaten, der als die Zugriffsadresse zum Zugreifen auf die Ziel-Streaming-Medien-Ressource dient.

7. Verfahren nach Anspruch 1, das ferner Folgendes umfasst:
falls der zweite Prozess die Verarbeitungsanforderung nicht verarbeiten kann, Versenden, durch den Edge-Server, der Verarbeitungsanforderung an einen dritten Prozess, wobei sich der dritte Prozess und der zweite Prozess in verschiedenen Schichten des CDN befinden;
Bestimmen, durch den Edge-Server, ob es der dritte Prozess ist, der die Verarbeitungsanforderung verarbeitet, falls es der dritte Prozess ist, der die Verarbeitungsanforderung verarbeitet, Erstellen, über den dritten Prozess, einer der Verarbeitungsanforderung entsprechenden Antwortanforderung, wobei die Antwortanforderung eine durch den dritten Prozess erzeugte Zugriffsadresse zum Zugreifen auf die Ziel-Streaming-Medien-Ressource beinhaltet;
Rückmelden, durch den Edge-Server, der durch den dritten Prozess erstellten Antwortanforderung an den zweiten Prozess, um es dem zweiten Prozess zu ermöglichen, eine Verbindung mit dem dritten Prozess herzustellen;
Umschreiben, durch den Edge-Server, über den zweiten Prozess, der Zugriffsadresse in der durch den dritten Prozess erstellten Antwortanforderung an die durch den zweiten Prozess erzeugten Zugriffsadresse, und Rückmelden einer Antwortanforderung mit der umgeschriebenen Zugriffsadresse an den Client, um es dem Client zu ermöglichen, eine Verbindung mit dem zweiten Prozess herzustellen; und
Übertragen, durch den Edge-Server, der Ziel-Streaming-Medien-Ressource über der Verbindung, die zwischen dem Client und dem zweiten Prozess hergestellt wird und der Verbindung, die zwischen dem zweiten Prozess und dem dritten Prozess hergestellt wird.

8. Verfahren nach Anspruch 7, wobei die Verarbeitungsanforderung eine Ressourcen-Hochlade-Anforderung beinhaltet und die Ressourcen-Hochlade-Anforderung Kandidaten-Streaming-Medien-Informationen beinhaltet, die durch den Client unterstützt werden, und wobei das Erstellen, durch den dritten Prozess, der der Verarbeitungsanforderung entsprechenden Antwortanforderung, ferner Folgendes beinhaltet:
Erzeugen, durch den dritten Prozess, von Antwort-Streaming-Medien-Informationen, basierend auf den Kandidaten-Streaming-Medien-Informationen;
Erhalten, durch den dritten Prozess, der IP-Adresse des öffentlichen Netzwerks und der Portadresse des dritten Prozesses, und Verwenden einer Kombination aus der IP-Adresse des öffentlichen Netzwerks und der Portadresse des dritten Prozesses als die Zugriffsadresse zum Zugreifen auf die Ziel-Streaming-Medien-Ressource; und
Erstellen, durch den dritten Prozess, der Antwortanforderung, und Verwenden der Antwort-Streaming-Medien-Informationen und der durch den dritten Prozess erzeugten Zugriffsadresse als einen Antwortnachrichtentext der Antwortanforderung.

9. Verfahren nach Anspruch 8, wobei das Übertragen der Ziel-Streaming-Medien-Ressource ferner Folgendes beinhaltet:
Verarbeiten, durch den Client, der Ziel-Streaming-Medien-Ressource gemäß den Antwort-Streaming-Medien-Informationen, und Hochladen der verarbeiteten Ziel-Streaming-Medien-Ressource auf den zweiten Prozess gemäß der durch den zweiten Prozess erzeugten Zugriffsadresse;
Zuordnen und Speichern, durch den zweiten Prozess, der verarbeiteten Ziel-Streaming-Medien-Ressource mit den Antwort-Streaming-Medien-Informationen, und Hochladen der verarbeiteten Ziel-Streaming-Medien-Ressource auf den dritten Prozess gemäß der durch den dritten Prozess erzeugten Zugriffsadresse; und
Zuordnen und Speichern, durch den dritten Prozess, der verarbeiteten Ziel-Streaming-Medien-Ressource mit den Antwort-Streaming-Medien-Informationen.

10. Verfahren nach Anspruch 7, wobei die Verarbeitungsanforderung eine Ressourcenerfassungsanforderung beinhaltet, und die Ressourcenerfassungsanforderung einen eindeutigen Bezeichner der Ziel-Streaming-Medien-Ressource beinhaltet; und
wobei das Erstellen, durch den dritten Prozess, der der Verarbeitungsanforderung entsprechenden Antwortanforderung, ferner Folgendes beinhaltet:
Erhalten, durch den dritten Prozess, von Ziel-Streaming-Medien-Informationen, die dem eindeutigen Bezeichner zugeordnet sind;
Erhalten, durch den dritten Prozess, der IP-Adresse des öffentlichen Netzwerks und der Portadresse des dritten Prozesses, und Verwenden einer Kombination aus der IP-Adresse des öffentlichen Netzwerks und der Portadresse des dritten Prozesses als die Zugriffsadresse zum Zugreifen auf die Ziel-Streaming-Medien-Ressource; und
Erstellen, durch den dritten Prozess, der Antwortanforderung, und Verwenden der Ziel-Streaming-Medien-Informationen und der durch den dritten Prozess erzeugten Zugriffsadresse als einen Antwortnachrichtentext der Antwortanforderung.

11. Verfahren nach Anspruch 10, wobei das Übertragen der Ziel-Streaming-Medien-Ressource ferner Folgendes beinhaltet:
Herunterladen, durch den zweiten Prozess, der Ziel-Streaming-Medien-Ressource aus dem dritten Prozess, gemäß der durch den dritten Prozess erzeugten Zugriffsadresse, und Zuordnen und Speichern der heruntergeladenen Ziel-Streaming-Medien-Ressource mit den Ziel-Streaming-Medien-Informationen; und
Herunterladen, durch den Client, der Ziel-Streaming-Medien-Ressource aus dem zweiten Prozess gemäß der durch den zweiten Prozess erzeugten Zugriffsadresse.

12. Verfahren nach Anspruch 7, das ferner Folgendes umfasst:
falls der dritte Prozess die Verarbeitungsanforderung nicht verarbeiten kann, Weiterleiten, durch den Edge-Server, der Verarbeitungsanforderung an einen vierten Prozess an einer gleichen Schicht wie der dritte Prozess, um es dem vierten Prozess zu ermöglichen, eine der Verarbeitungsanforderung entsprechenden Antwortanforderung zu erstellen, wobei die Antwortanforderung eine durch den vierten Prozess erzeugte Zugriffsadresse zum Zugreifen auf die Ziel-Streaming-Medien-Ressource beinhaltet;
Rückmelden, durch den Edge-Server, über den dritten Prozess, der durch den vierten Prozess erstellten Antwortanforderung an den zweiten Prozess, um es dem zweiten Prozess zu ermöglichen, eine Verbindung mit dem vierten Prozess herzustellen;
Umschreiben, durch den zweiten Prozess, der Zugriffsadresse in der durch den vierten Prozess erstellten Antwortanforderung an die durch den zweiten Prozess erzeugten Zugriffsadresse, und Rückmelden einer Antwortanforderung mit der umgeschriebenen Zugriffsadresse an den Client, um es dem Client zu ermöglichen, eine Verbindung mit dem zweiten Prozess herzustellen; und
Übertragen, durch den Edge-Server, der Ziel-Streaming-Medien-Ressource über die zwischen dem Client und dem zweiten Prozess hergestellte Verbindung und die zwischen dem zweiten Prozess und dem vierten Prozess hergestellte Verbindung.

13. System zum Übertragen von Streaming-Medien-Ressourcen, das einen Client und einen Edge-Knoten in einem Content Delivery Network (CDN) umfasst, wobei:
der Client konfiguriert ist, um eine Verarbeitungsanforderung für eine Ziel-Streaming-Medien-Ressource an den Edge-Knoten zu senden; und
der Edge-Knoten für Folgendes konfiguriert ist:
Versenden der Verarbeitungsanforderung an einen ersten Prozess, Bestimmen, ob es der erste Prozess ist, der die Verarbeitungsanforderung verarbeitet, falls es nicht der erste Prozess ist, der die Verarbeitungsanforderung verarbeitet, Weiterleiten der Verarbeitungsanforderung an einen zweiten Prozess in einer Schicht, in der sich der erste Prozess befindet, Bestimmen, ob es der zweite Prozess ist, der die Verarbeitungsanforderung verarbeitet, falls es der zweite Prozess ist, der die Verarbeitungsanforderung verarbeitet, Erstellen, durch den zweiten Prozess, einer der Verarbeitungsanforderung entsprechenden Antwortanforderung, wobei die Antwortanforderung einen durch den zweiten Prozess erzeugten Interactive Connectivity Establishment(ICE)-Kandidaten beinhaltet und als eine Zugriffsadresse zum Zugreifen auf die Ziel-Streaming-Medien-Ressource dient, Rückmelden der Antwortanforderung an den ersten Prozess, und Rückmelden der Antwortanforderung über den ersten Prozess an den Client, um es dem Client zu ermöglichen, eine WebRTC-Kommunikationsverbindung mit dem zweiten Prozess herzustellen, und der Ziel-Streaming-Medien-Ressource zu ermöglichen, über die hergestellte WebRTC-Kommunikationsverbindung übertragen zu werden.

14. System nach Anspruch 13, das ferner einen zentralen Knoten umfasst, wobei der zentrale Knoten wenigstens einen dritten Prozess beinhaltet, und der dritte Prozess konfiguriert ist, um, wenn der zweite Prozess die Verarbeitungsanforderung nicht verarbeiten kann, die versendete Verarbeitungsanforderung zu empfangen und eine der Verarbeitungsanforderung entsprechenden Antwortanforderung zu erstellen.

15. System nach Anspruch 14, wobei die Antwortanforderung eine durch den dritten Prozess erzeugte Zugriffsadresse zum Zugreifen auf die Ziel-Streaming-Medien-Ressource beinhaltet, und die durch den dritten Prozess erstellte Antwortanforderung an den zweiten Prozess zurückgeführt wird, um es dem zweiten Prozess zu ermöglichen, eine Verbindung mit dem dritten Prozess herzustellen; und
der zweite Prozess ferner konfiguriert ist, um die Zugriffsadresse in der durch den dritten Prozess erstellten Antwortanforderung in die durch den zweiten Prozess erzeugte Zugriffsadresse umzuschreiben, und um eine Antwortanforderung mit der umgeschriebenen Zugriffsadresse an den Client rückzumelden, um es dem Client zu ermöglichen, eine Verbindung mit dem zweiten Prozess herzustellen.

## Revendications

1. Procédé de transmission de ressources de flux multimédia destinés à la diffusion en continu, le procédé comprenant :
la réception, par un serveur d'équilibrage de charge dans un réseau de diffusion de contenu, CDN, d'une demande de traitement pour une ressource de flux multimédia destiné à la diffusion en continu cible envoyée par un client, et l'expédition de la demande de traitement à destination d'un premier processus dans un serveur de périphérie dans le CDN ;
la détermination, par le serveur de périphérie, du fait de savoir s'il est le premier processus à traiter la demande de traitement, et s'il n'est pas le premier processus à traiter la demande de traitement, le réacheminement de la demande de traitement à destination d'un deuxième processus dans une couche dans laquelle le premier processus est situé ;
la détermination, par le serveur de périphérie, du fait de savoir s'il est le deuxième processus à traiter la demande de traitement, et s'il est le deuxième processus à traiter la demande de traitement, la construction, par le biais du deuxième processus, d'une demande de réponse correspondant à la demande de traitement, la demande de réponse incluant un candidat à l'établissement d'une connectivité interactive, ICE, généré par le deuxième processus servant d'adresse d'accès pour accéder à la ressource de flux multimédia destiné à la diffusion en continu cible ; et
le renvoi, par le serveur de périphérie, de la demande de réponse au premier processus, et le renvoi de la demande de réponse au client par le biais du premier processus, pour permettre au client d'établir une connexion de communication WebRTC avec le deuxième processus, et à la ressource de flux multimédia destiné à la diffusion en continu cible d'être transmise par le biais de la connexion de communication WebRTC établie.

2. Procédé selon la revendication 1, dans lequel la demande de traitement inclut une demande d'acquisition de ressource, et la détermination, par le serveur de périphérie, du fait de savoir s'il est le premier processus à traiter la demande de traitement comporte en outre :
la détermination du fait de savoir si la ressource de flux multimédia destiné à la diffusion en continu cible est incluse dans une ressource locale associée au premier processus, si la ressource de flux multimédia destiné à la diffusion en continu cible est incluse dans la ressource locale associée au premier processus, la détermination du fait qu'il est le premier processus à traiter la demande de traitement, et si la ressource de flux multimédia destiné à la diffusion en continu cible n'est pas incluse dans la ressource locale associée au premier processus, la détermination du fait qu'il n'est pas le premier processus à traiter la demande de traitement.

3. Procédé selon la revendication 1, dans lequel la demande de traitement inclut une demande de téléversement de ressource, et la demande de téléversement de ressource inclut un identifiant unique de la ressource de flux multimédia destiné à la diffusion en continu cible, et la détermination, par le serveur de périphérie, du fait de savoir s'il est le premier processus à traiter la demande de traitement comporte en outre :
le calcul d'une valeur de hachage correspondant à l'identifiant unique, et la détermination du fait de savoir si la valeur de hachage désigne le premier processus, si la valeur de hachage désigne le premier processus, la détermination du fait qu'il est le premier processus à traiter la demande de traitement et si la valeur de hachage ne désigne pas le premier processus, la détermination du fait qu'il n'est pas le premier processus à traiter la demande de traitement.

4. Procédé selon la revendication 1, dans lequel la demande de traitement inclut une demande de téléversement de ressource, la demande de téléversement de ressource inclut des informations de flux multimédia destiné à la diffusion en continu candidat prises en charge par le client, et la demande de réponse inclut en outre des informations de flux multimédia destiné à la diffusion en continu générées par le deuxième processus en fonction des informations de flux multimédia destiné à la diffusion en continu, et la transmission de la ressource de flux multimédia destiné à la diffusion en continu cible par le biais de la connexion établie comporte en outre :
le traitement, par le client, de la ressource de flux multimédia destiné à la diffusion en continu cible en fonction des informations de flux multimédia destiné à la diffusion en continu de réponse, et le téléversement de la ressource de flux multimédia destiné à la diffusion en continu cible traitée sur le deuxième processus en fonction de l'adresse d'accès.

5. Procédé selon la revendication 1, dans lequel la demande de traitement inclut une demande d'acquisition de ressource, la demande d'acquisition de ressource inclut un identifiant unique de la ressource de flux multimédia destiné à la diffusion en continu cible, et la demande de réponse inclut en outre des informations de flux multimédia destiné à la diffusion en continu cible associées à la ressource de flux multimédia destiné à la diffusion en continu cible, et la transmission de la ressource de flux multimédia destiné à la diffusion en continu cible par le biais de la connexion établie comporte en outre :
le téléchargement, par le client, de la ressource de flux multimédia destiné à la diffusion en continu cible par le biais de l'adresse d'accès, et le traitement de la ressource de flux multimédia destiné à la diffusion en continu cible téléchargée en fonction des informations de flux multimédia destiné à la diffusion en continu.

6. Procédé selon la revendication 1, dans lequel la génération du candidat à l' ICE par le deuxième processus comporte en outre :
l'obtention, par le deuxième processus, de l'adresse IP du réseau public et de l'adresse du port du deuxième processus, et l'utilisation d'une combinaison de l'adresse IP du réseau public et de l'adresse du port du deuxième processus en tant que candidat à l'ICE servant d'adresse d'accès pour accéder à la ressource de flux multimédia destiné à la diffusion en continu cible.

7. Procédé selon la revendication 1, comprenant en outre :
si le deuxième processus ne peut pas traiter la demande de traitement, l'envoi, par le serveur de périphérie, de la demande de traitement à un troisième processus, le troisième processus et le deuxième processus étant situés dans différentes couches du CDN ;
la détermination, par le serveur de périphérie, du fait de savoir s'il est le troisième processus à traiter la demande de traitement, s'il est le troisième processus pour traiter la demande de traitement, la construction, par le biais du troisième processus, d'une demande de réponse correspondant à la demande de traitement, la demande de réponse inclut une adresse d'accès générée par le troisième processus pour accéder à la ressource de flux multimédia destiné à la diffusion en continu cible ;
le renvoi, par le serveur de périphérie, de la demande de réponse construite par le troisième processus au deuxième processus, pour permettre au deuxième processus d'établir une connexion avec le troisième processus ;
la réécriture, par le serveur de périphérie, par le biais du deuxième processus, de l'adresse d'accès dans la demande de réponse construite par le troisième processus sur l'adresse d'accès générée par le deuxième processus, et le renvoi d'une demande de réponse comportant l'adresse d'accès réécrite à destination du client, pour permettre au client d'établir une connexion avec le deuxième processus ; et
la transmission, par le serveur de périphérie, de la ressource de flux multimédia destiné à la diffusion en continu cible par le biais de la connexion établie entre le client et le deuxième processus et la connexion établie entre le deuxième processus et le troisième processus.

8. Procédé selon la revendication 7, dans lequel la demande de traitement inclut une demande de téléversement de ressource, et la demande de téléchargement de ressource inclut des informations de flux multimédia destiné à la diffusion en continu candidat prises en charge par le client, et la construction, par le troisième processus, de la demande de réponse correspondant à la demande de traitement inclut en outre :
la génération, par le troisième processus, d'informations de flux multimédia destiné à la diffusion en continu de réponse en fonction des informations de flux multimédia destiné à la diffusion en continu candidat ;
l'obtention, par le troisième processus, de l'adresse IP de réseau public et de l'adresse de port du troisième processus, et l'utilisation d'une combinaison de l'adresse IP de réseau public et de l'adresse de port du troisième processus comme adresse d'accès pour accéder à la ressource de flux multimédia destiné à la diffusion en continu cible ; et
la construction, par le troisième processus, de la demande de réponse, et l'utilisation des informations de flux multimédia destiné à la diffusion en continu de réponse et de l'adresse d'accès générée par le troisième processus comme corps de message de réponse de la demande de réponse.

9. Procédé selon la revendication 8, dans lequel la transmission de la ressource de flux multimédia destiné à la diffusion en continu cible comporte en outre :
le traitement, par le client, de la ressource de flux multimédia destiné à la diffusion en continu cible en fonction des informations de flux multimédia destiné à la diffusion en continu de réponse, et le téléversement de la ressource de flux multimédia destiné à la diffusion en continu cible traitée sur le deuxième processus en fonction de l'adresse d'accès générée par le deuxième processus ;
l'association et le stockage, par le deuxième processus, de la ressource de flux multimédia destiné à la diffusion en continu cible traitée avec les informations de flux multimédia destiné à la diffusion en continu de réponse, et le téléversement de la ressource de flux multimédia destiné à la diffusion en continu cible traitée sur le troisième processus en fonction de l'adresse d'accès générée par le troisième processus ; et
l'association et le stockage, par le troisième processus, de la ressource de flux multimédia destiné à la diffusion en continu cible traitée avec les informations de flux multimédia destiné à la diffusion en continu de réponse.

10. Procédé selon la revendication 7, dans lequel la demande de traitement inclut une demande d'acquisition de ressource, et la demande d'acquisition de ressource inclut un identifiant unique de la ressource de flux multimédia destiné à la diffusion en continu cible ; et
la construction, par le troisième processus, de la demande de réponse correspondant à la demande de traitement comporte en outre :
l'obtention, par le troisième processus, d'informations de flux multimédia destiné à la diffusion en continu de diffusion en continu cible associées à l'identifiant unique ;
l'obtention, par le troisième processus, de l'adresse IP de réseau public et de l'adresse de port du troisième processus, et l'utilisation d'une combinaison de l'adresse IP de réseau public et de l'adresse de port du troisième processus comme adresse d'accès pour accéder à la ressource de flux multimédia destiné à la diffusion en continu cible ; et
la construction, par le troisième processus, de la demande de réponse, et l'utilisation des informations de flux multimédia destiné à la diffusion en continu cible et de l'adresse d'accès générée par le troisième processus comme corps de message de réponse de la demande de réponse.

11. Procédé selon la revendication 10, dans lequel la transmission de la ressource de flux multimédia destiné à la diffusion en continu cible comporte en outre :
le téléchargement, par le deuxième processus, de la ressource de flux multimédia destiné à la diffusion en continu cible à partir du troisième processus en fonction de l'adresse d'accès générée par le troisième processus, et l'association et le stockage de la ressource de flux multimédia destiné à la diffusion en continu cible téléchargée avec les informations de flux multimédia destiné à la diffusion en continu cible ; et
le téléchargement, par le client, de la ressource de flux multimédia destiné à la diffusion en continu cible à partir du deuxième processus en fonction de l'adresse d'accès générée par le deuxième processus.

12. Procédé selon la revendication 7, comprenant en outre :
si le troisième processus ne peut pas traiter la demande de traitement, le réacheminement, par le serveur de périphérie, de la demande de traitement à un quatrième processus au niveau d'une même couche que le troisième processus, pour permettre au quatrième processus de construire une demande de réponse correspondant à la demande de traitement, la demande de réponse incluant une adresse d'accès générée par le quatrième processus pour accéder à la ressource de flux multimédia destiné à la diffusion en continu cible ;
le renvoi, par le serveur de périphérie, par le biais du troisième processus, de la demande de réponse construite par le quatrième processus à destination du deuxième processus, pour permettre au deuxième processus d'établir une connexion avec le quatrième processus ;
la réécriture, par le deuxième processus, de l'adresse d'accès dans la demande de réponse construite par le quatrième processus sur l'adresse d'accès générée par le deuxième processus, et le renvoi d'une demande de réponse comportant l'adresse d'accès réécrite à destination du client, pour permettre au client d'établir une connexion avec le deuxième processus ; et
la transmission, par le serveur de périphérie, de la ressource de flux multimédia destiné à la diffusion en continu cible par le biais de la connexion établie entre le client et le deuxième processus et de la connexion établie entre le deuxième processus et le quatrième processus.

13. Système de transmission de ressources de flux multimédia destinés à la diffusion en continu, comprenant un client et un nœud de périphérie dans un réseau de diffusion de contenu, CDN, dans lequel :
le client est configuré pour envoyer une demande de traitement pour une ressource de flux multimédia destiné à la diffusion en continu cible au nœud de périphérie ; et
le nœud de périphérie est configuré pour :
expédier la demande de traitement à un premier processus, déterminer s'il est le premier processus à traiter la demande de traitement, s'il n'est pas le premier processus à traiter la demande de traitement, réacheminer la demande de traitement à un deuxième processus dans une couche dans laquelle le premier processus est situé, déterminer s'il est le deuxième processus à traiter la demande de traitement, s'il est le deuxième processus à traiter la demande de traitement, construire, par le biais du deuxième processus, une demande de réponse correspondant à la demande de traitement, la demande de réponse incluant un candidat à l'établissement de connectivité interactive, ICE, généré par le deuxième processus servant d'adresse d'accès pour accéder à la ressource de flux multimédia destiné à la diffusion en continu cible, renvoyer la demande de réponse au premier processus et renvoyer la demande de réponse au client par le biais du premier processus, pour permettre au client d'établir une connexion de communication WebRTC avec le deuxième processus, et à la ressource de flux multimédia destiné à la diffusion en continu cible d'être transmise par le biais de la connexion de communication WebRTC établie.

14. Système selon la revendication 13, comprenant en outre un nœud central, le nœud central incluant au moins un troisième processus, et le troisième processus étant configuré pour, lorsque le deuxième processus ne peut pas traiter la demande de traitement, recevoir la demande de traitement envoyée et construire un demande de réponse correspondant à la demande de traitement.

15. Système selon la revendication 14, dans lequel la demande de réponse inclut une adresse d'accès générée par le troisième processus pour accéder à la ressource de flux multimédia destiné à la diffusion en continu cible, et la demande de réponse construite par le troisième processus est renvoyée au deuxième processus pour permettre au deuxième processus d'établir une connexion avec le troisième processus ; et
le deuxième processus est en outre configuré pour réécrire l'adresse d'accès dans la demande de réponse construite par le troisième processus dans l'adresse d'accès générée par le deuxième processus, et renvoyer une demande de réponse comportant l'adresse d'accès réécrite au client, pour permettre au client d'établir une connexion avec le deuxième processus.
